# EUROPEAN PATENT SPECIFICATION

(11) **EP 2 182 475 B1**
(45) Date of publication and mention of the grant of the patent: **23.08.2017**
(21) Application number: 09012290.4
(22) Date of filing: 28.09.2009
(51) Int. Cl.: G06Q 10/00

(54) **Backend service adaptation**
Backend-Service-Anpassung
Adaptation de service en arrière plan

(30) Priority: 06.10.2008 US 246247
(43) Date of publication of application: 05.05.2010
(73) Proprietor: SAP SE, 69190 Walldorf (DE)
(72) Inventor: Fiedler, Thomas, 69190 Walldorf (DE); Hartig, Martin, 69190 Walldorf (DE); Klein, Udo, 69190 Walldorf (DE); Wachs, Daniel, 69190 Walldorf (DE)
(74) Representative: Müller-Boré & Partner Patentanwälte PartG mbB

(56) References cited:
- US-A1- 2005 021 998
- US-A1- 2008 005 623

## Description

### TECHNICAL FIELD

The subject matter described herein relates to systems, techniques, and articles for backend service adaptation.

### BACKGROUND

Frontend service adaptation allows for the combination of fields from different business object nodes so that a resulting adapted business object node can be used for displaying required business data in a user interface. With frontend service adaptation, an adapted business object node is configured to contain fields from different business object nodes along an association path. Such an arrangement can result in a large amount of metadata residing and being processed by a frontend server. In addition, during runtime, all data on an associated path is transferred to the frontend server. Moreover, many association paths may need to be evaluated on the frontend in order to access required business object fields. All of such requirements relating to frontend service adaptation can negatively affect performance, network data volume, memory consumption, and response time for the corresponding user interfaces.

US 2005/021998 discloses methods and apparatus, including computer program products, that include providing to a client a definition of an object class representing attributes of a first collection of data elements and a list of possible operations on the first collection, each data element having attributes and possible operations in common with other data elements from the first collection. The method also includes customizing a usage policy
of the first collection for a configuration of the client, receiving from the client a first request to execute an operation from the list on one or more data elements from the first collection, checking the first request against the definition and the usage policy, and executing the operation on the one or more data elements of the first collection.

### SUMMARY

A request originating at a frontend server for data encapsulated in a plurality of business objects stored in a business object layer at the backend server is received. Such a request originates from a user interface layer and is received by a controller layer. Subsequently, a controller object is instantiated in the controller layer at the backend server. The controller object has nodes that are mapped to nodes in the plurality of business objects so that the controller object encapsulates the requested data. Thereafter, transmission of data response to the request encapsulated by the controller object to the frontend server is initiated. At least a portion of the data can be rendered in user interface view in the user interface layer.

A node of the controller object can be mapped to a primary node of a business object. The ID of the primary node can be used to be the ID of the corresponding node of the controller object. Associations of nodes in the controller object can be mapped to associations of the primary node and/or associations of business object nodes associated with the primary node. Attributes of nodes in the controller object can be mapped to attributes of the primary node and/or attributes of business object nodes associated with the primary node. Queries of nodes in the controller object can be mapped to queries of the primary node and/or queries of business object nodes associated with the primary node.

Data displayed together in the user interface can be grouped together into a single controller object. Such data displayed together can be rendered in graphical user interface elements stored within a single graphical user interface container.

A node of the controller object can have an extension field that is mapped to an extension field of a business object node. The extension filed can be visible at the user interface layer.

A mapping object can define mappings between entities of the controller object to corresponding entities in the one or more business objects. The entities can include attributes, actions, queries, and associations of business objects.

In an interrelated aspect, a request originating at a frontend server for data encapsulated in a plurality of business objects is received. The plurality of business objects are stored in a business object layer at the backend server. The request originates from a user interface layer and being received by a controller layer. Thereafter, a plurality of controller objects are instantiated in the controller layer at the backend server. The controller objects each have nodes that are mapped to nodes in the plurality of business objects so that the controller objects as a whole encapsulate the requested data. Transmission of data response to the request encapsulated by the controller objects is then transmitted to the frontend server.

Two or more nodes for different controller objects can be mapped to the same business object node. Two or more nodes for different controller objects can have extension fields that are mapped to an extension field for a single business object node. The controller objects can correspond to disjoint user interface views in the user interface layer. At least one of the controller objects can correspond to two or more user interface views in the user interface layer. At least two of the controller objects can be associated and have a corresponding association path.

In a further interrelated aspect, a system includes a frontend server and a backend server that is remote from the frontend server. The frontend server originates, at a user interface layer, a request transmitted to a controller layer of the backend server for data encapsulated in a plurality of business objects, the plurality of business objects being stored in a business object layer at the backend server, the request originating from a user interface layer and being received by a controller layer. The backend server instantiates a controller object in the controller layer, the controller object having nodes that are mapped to nodes in the plurality of business objects so that the controller object encapsulates the requested data. The backend server further initiates transmission of data response to the request encapsulated by the controller object to the frontend server.

Articles are also described that comprise a tangible machine-readable storage medium embodying instructions that when performed by one or more machines result in operations described herein. Similarly, computer systems are also described that may include a processor and a memory coupled to the processor. The memory may encode one or more programs that cause the processor to perform one or more of the operations described herein.

The subject matter described herein provides many advantages. By shifting service adaptation to the backend, performance, network data volume, memory consumption, and response times can all be improved. These improvements are based, in part, in a reduction of metadata on the frontend, data transferred to the frontend, and fewer roundtrips between the frontend and the backend.

The details of one or more variations of the subj ect matter described herein are set forth in the accompanying drawings and the description below. Other features and advantages of the subject matter described herein will be apparent from the description and drawings, and from the claims.

### DESCRIPTION OF DRAWINGS

FIG. 1 is a process flow diagram illustrating a method of providing data to a user interface from a plurality of business objects on a backend server;
FIG. 2 is a diagram illustrating a user interface having fields populated by a plurality of business objects in a business object layer;
FIG. 3A is a diagram illustrating business object nodes encapsulating data required for a user interface view;
FIG. 3B is a diagram illustrating a controller object corresponding to the business object nodes of FIG. 3A;
FIG 4A is a diagram illustrating a relationship among controller object nodes and corresponding business object nodes;
FIG. 4B is a diagram illustrating mapping of attributes from controller object nodes to attributes of corresponding business object nodes;
FIG. 4C is a diagram illustrating mapping of queries from controller object nodes to queries of corresponding business object nodes;
FIG. 5 is a diagram illustrating a relationship among a user interface layer, a controller layer, and a business object layer; and
FIG. 6 is a diagram illustrating a mapping of extension fields between controller object nodes and business object nodes.

Like reference symbols in the various drawings indicate like elements.

### DETAILED DESCRIPTION

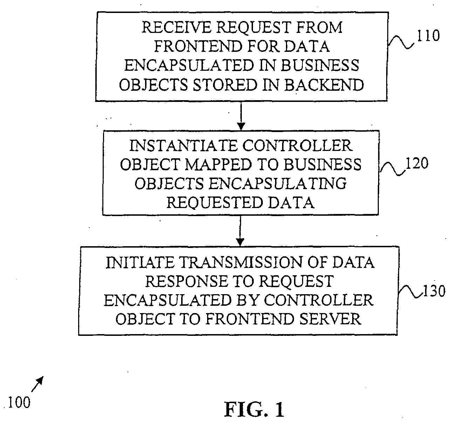

FIG. 1 is a process flow diagram illustrating a method 100, in which, at 110, a request originating at a frontend server for data encapsulated in a plurality of business objects is received. The plurality of business objects are stored in a business object layer at the backend server remote from the frontend server. In addition, the request originates from a user interface layer is received at a controller layer. A controller object is, at 120, instantiated in the controller layer at the backend server. Nodes of the controller object are mapped to nodes in the plurality of business objects so that the controller object encapsulates the request data. Thereafter, at 130, transmission of data response to the request encapsulated by the controller object to the frontend server is initiated.

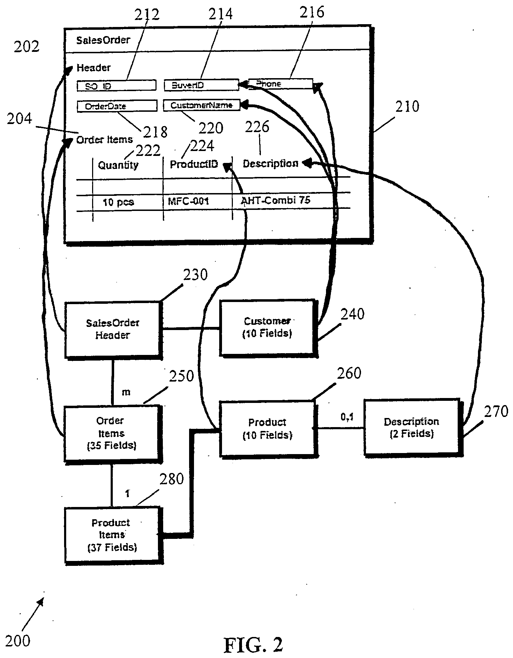

FIG. 2 is a diagram 200 illustrating an example of a service adaptation. A SalesOrder 210 at user interface layer (e.g., GUI, etc.) includes two portions, a Header portion 202 and a Order Items portion 204 which in turn include a plurality of fields 212-226 that are populated with data which is in turn obtained from a plurality of business object nodes 230-270 encapsulating relevant data on a backend. As is illustrated, a SalesOrder ID field 212 in the SalesOrder 210 can be based on a field in a SalesOrder Header business object node 230. A BuyerID field 214, a Phone field 216, and a CustomerName field 220 can all be populated with data obtained from a Customer business object node 240. A ProductID field 224 can be populated from a Product business object node 260, and a Description field 226 can be populated from a Description business object node 270. As will be noted from the diagram 200, the business object nodes 230-280 have interrelationships such as the Description business object node 270 being used to populate fields in the Product business object node 260, which in turn is used to populate fields of the Product Items business object node 280. Techniques for mapping such interrelationships are described below.

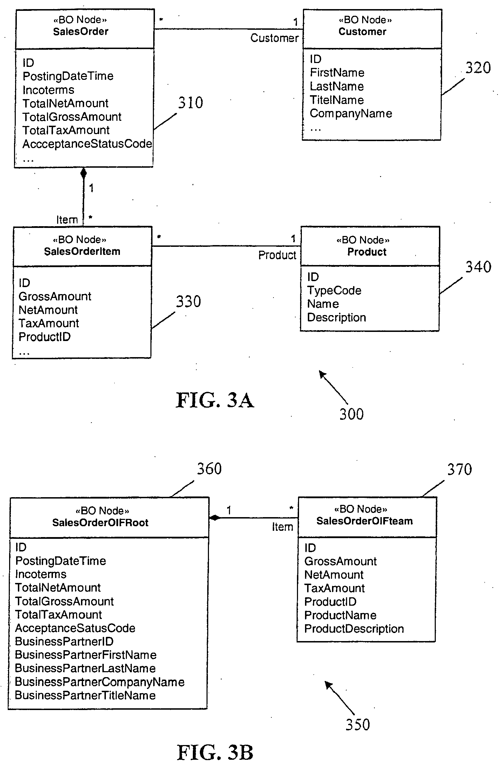

FIG. 3A is a diagram 300 illustrating a SalesOrder business object node 310, a BusinessPartner business object node 320, a SalesOrderItem business object node 330, and a Product business object node 340. All relevant information to be used at an interface in connection with a sales order can, with reference to the diagram 350 of FIG. 3B, be encapsulated in a controller object that comprises a SalesOrderHeaderView node 360 and a SalesOrderItemView node 370. The controller object fully wraps the business object nodes 310-340 in a declarative way by defining a mapping between fields of the business object nodes 310-340 and fields in the controller object. Calls to the controller object can be delegated at the backend as opposed to the frontend.

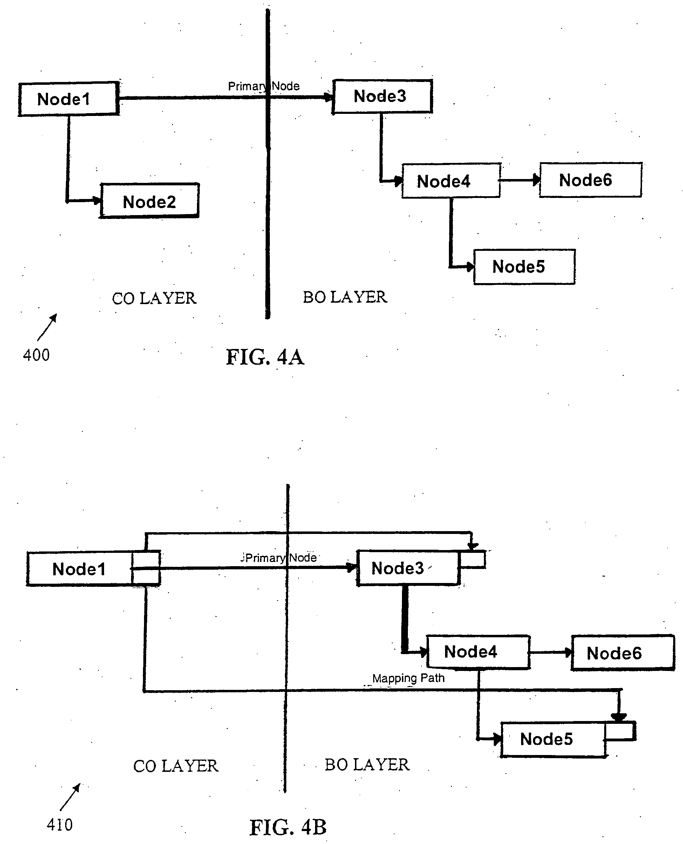

FIG. 4A is a diagram 400 illustrating the interrelation between controller object nodes (Node1, Node2) and nodes associated with one or more business objects (Node3, Node4, Node5, Node6) in a business object layer. Node1 is a controller object node that is mapped to Node3 which is a node of a business object in a business object layer. In this instance, Node3 can be referred to as a primary node and the NodeID of Node3 can be used as the NodeID of Node1. In this diagram 400, association paths couple Node1 to Node2, Node 3 to Node 4, Node 4 to Node5, and Node4 to Node6. Associations of Node1 can be mapped to associations of the primary node (i.e., Node3). Associations which can be reached by associations starting from the primary node can also be used for mapping.

FIG. 4B is a diagram 410 illustrating Node1 with attributes A1, A2, Node 3 with an attribute B2, and Node 5 with an attribute C3. As illustrated, attribute A1 of Node1 (the CO Node) can be mapped to attribute B2 of Node3 (the primary node). Attributes which can be reached by associations starting from the primary node can also be used for attribute mapping. For example, attribute A2 of Node 1 can be mapped to attribute C3 of Node5. Attributes on the BO side can be defined by an association path starting at the primary node. In this example, the association path starts at Node 3 and links to Node5 via Node4. A Mapping Path can be defined by a list of subsequent associations starting from a primary node. Filter values can be declared for each association of the mapping path. Attribute mapping can require that the associated data type for the controller object and the corresponding business objects be identical.

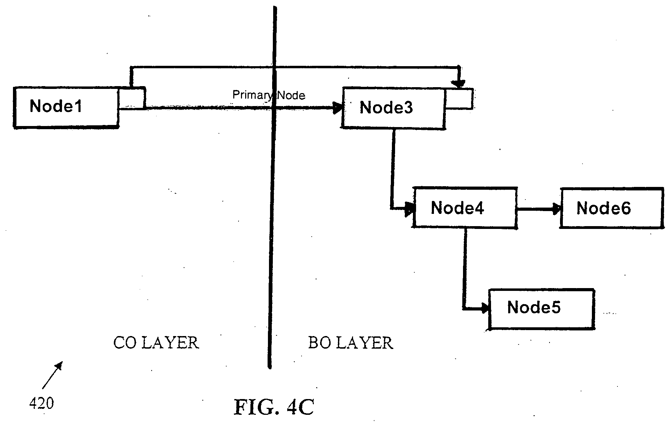

FIG. 4C is a diagram 420 that illustrated that queries of a controller node can be mapped to queries of the primary node. In this example, a query Q1 of Node1 is mapped to a query Q2 of Node 2. Query mapping can require that the data type for the controller object and the corresponding business objects be identical.

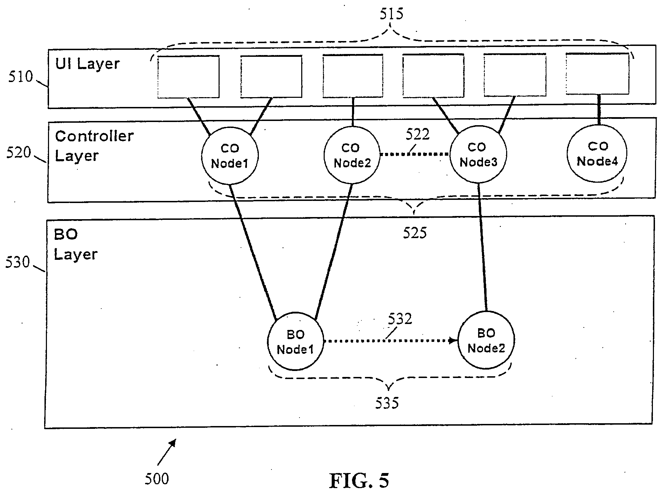

FIG. 5 is a diagram 500 illustrating how various user interface views 515 can be presented in a user interface layer 510. As is illustrated, the user interface views are generated using controller object nodes 525 in a controller layer 520. The controller object nodes are populated using data obtained from business object nodes 535 in a business object layer 530. In some variations, a controller object node association 522 may exist among the controller object nodes 525. In addition, a business object node association 532 can exist among the business object nodes 535.

Data that is always displayed together in a view in the user interface layer 510 can be grouped together in a single controller object node 525. As an example, if there are several forms arranged in a tab container, all contained data of each tab can be grouped to the same controller object node. Such a controller object can be referred to as a floorplan specific controller object.

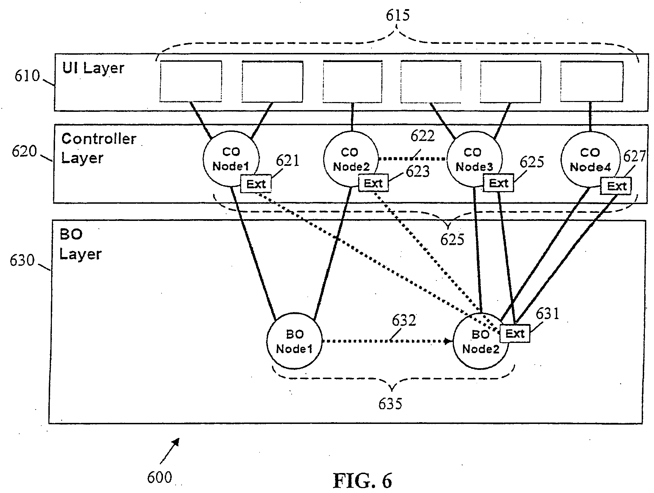

FIG. 6 is a diagram 600 (similar to the diagram 500 of FIG. 5) that illustrates how various user interface views 615 can be presented in a user interface layer 610. As is illustrated, the user interface views are generated using controller object nodes 625 in a controller layer 620. The controller object nodes are populated using data obtained from business object nodes 635 in a business object layer 630. In some variations, a controller object node association 622 may exist among the controller object nodes 625. In addition, a business object node association 632 can exist among the business object nodes 635. The controller objects 625 and the business objects 635 in this variation can be enabled to have field extensibility such that fields in such objects can be extended. For example, controller object nodes 625 can each include an extension field 621, 623, 625, 627 that are mapped to an extension field 631 of business object node2.

In order to implement field extensibility, a backend service adaptation mapping definition can be created for the extension fields which in turn has a pointer to an original definition. The mapping definition can contain information that characterizes which extension field in a proxy structure of the controller object node is mapped to which extension field in a proxy structure of an underlying business object node.

Extensibility can be initiated by starting with a business object node to which one or more fields are to be extended. Thereafter, all controller objects nodes which have the extended business object node as the primary node can be extended. This can result in the extended fields being visible on the user interface. Optionally, the controller object nodes can be extended by associations.

Extensibility can also be initiated by starting with a controller object node to which one or more fields are to be extended. A primary business object node corresponding to the controller object node can first be extended to include the new fields. All other controller object nodes in which the extended business object node is the primary node can also be extended. Optionally, the controller object nodes can be extended by associations.

A mapping object can be used to define mappings between entities of a controller object to corresponding entities in one or more business objects. Entities can include attributes, actions, queries, and associations of business objects. The existence of a mapping object indicates whether a business object node is mapped. As discussed above, the mapping defines a business object node that acts as the primary node of the mapping tree. All entities of the source node are then mapped to objects of the primary node or to nodes that are reachable via associations according a business object model. Due to that fact every entity in the target business object can be described by a path of several subsequent associations. The needed paths for the definition of the mapping can be stored as mapping path objects. In the case of filtered associations, the setting for the filter values can be defined. The definition of an attribute mapping can be given by a source attribute and a target attribute. Every attribute in a business object hierarchy can be given by a path.

The storage of mapping metadata can be organized with a set of ABAP database tables. The content of the tables can be transported via a logical transport object. The following sections describe the metadata tables. The underlined cells in the table definition are the key fields of the corresponding metadata table.

Header Information. This table can store the administrative data of the mapping. It contains the name of the mapped business object, the creation information and the change information. The name of the mapped business object is the key of this table.

**BSA_I_HEADER Table**

| ***FieldName*** | ***Data Element*** | ***Technical Type*** |
|---|---|---|
| BO_NAME | BSA_BO_NAME | CHAR 30 |
| CREATED_BY | CNAM | CHAR 12 |
| CREATED_ON_DATE | RDIR_CDATE | DATS 8 |
| CREATE_ON_TIME | SCOOCRTIME | TIMS 6 |
| CHANGED_BY | UNAM | CHAR12 |
| CHANGED_ON_DATE | RDIR_UDATE | DATS 8 |
| CHANGED_ON_TIME | SCOOLCHTIME | TIMS 6 |

Definition of Primary Node. This table can store the link to the business object node of the business object layer that is used as primary node of the mapping. The link to the node can be given by the name of the business object (PRIMARY_BO_NAME) and the name of the node (PRIMARY_NODE_NAME). In the case of an DO node, the DO_PREFIX field is filled with the name of the prefix of the corresponding HO-DO association.

**BSA_I_PRMRY_NODE Table**

| ***FieldName*** | ***Data Element*** | ***Technical Type*** |
|---|---|---|
| BO_NAME | BSA_BO_NAME | CHAR 30 |
| BO_NODE_NAME | BSA_BO_NODE_NAME | CHAR 30 |
| PRMRY_BO_NAME | BSA_BO_NAME | CHAR 30 |
| PRMRY_NODE_NAME | BSA_BO_NODE_NAME | CHAR 30 |
| PRMRY_DO_PREFIX | BSA_PRIMARY_DO_PREFIX | STRING |

Mapping Path Definition. The mapping paths that are needed to define the mappings can be defined with table BSA_I_PATH.

**BSA_I_PATH Table**

| ***FieldName*** | ***Data Element*** | ***Technical Type*** |
|---|---|---|
| BO_NAME | BSA_BO_NAME | CHAR 30 |
| PATH_ID | BSA_PATH_ID | CHAR 30 |
| BO_NODE_NAME | BSA_BO_NODE_NAME | CHAR 30 |
| PRED_PATH_ID | BSA_PRED_PATH_ID | CHAR 30 |
| ASSOCIATION-NAME | BSA_PATH_ASSOCIATION_NAME | CHAR 30 |
| FILTER_MODE | BSA_PATH_FILTER_MODE | CHAR 1 |
| MAX_EDIT_MODE | BSA_PATH_MAX_EDIT_MODE | CHAR 1 |

### BSA_PATH_FILTER_MODE

1 = preset by Values
2 = preset by exit call

### BSA_PATH_MAX_EDIT_MODE

1 = Read Only
2 = Edit
3 = Edit Exclusive

Filtersetting Definition. When the filter setting mode in the mapping path is defined as Filtered by Values (mode=1), the filter settings can be defined as follows.

**BSA_I_FILTER_VAL Table**

| ***FieldName*** | ***Data Element*** | ***Technical Type*** |
|---|---|---|
| BO_NAME | BSA_BO_NAME | CHAR 30 |
| PATH_ID | BSA_PATH_ID | CHAR 30 |
| ATTRIBUTE_NAME | BSA_PATH_FILTER_ATTRIBUTE_NAME | CHAR 30 |
| VALUE | BSA_PATH_FILTER_ATTRIBUTE_VAL | STRING |

Attribute mapping can be provided in a BSA_I_ATTR_MAP table.

**BSA_I_ATTR_MAP Table**

| ***FieldName*** | ***Data Element*** | ***Technical Type*** |
|---|---|---|
| BO_NAME | BSA_BO_NAME | CHAR 30 |
| BO_NODE_NAME | BSA_BO_NODE_NAME | CHAR 30 |
| ATTR_SEQNR | BSA_BO_NODE_ATTRIBUTE_SEQNR | NUMC 3 |
| ATTRIBUTE_NAME | BSA_BO_NODE_ATTRIBUTE_NAME | STRING |
| PATH_ID | BSA_PATH_ID | CHAR 30 |
| REF_ATTR_NAME | BSA_BO_NODE_REF_ATTRIBUTE_NA ME | STRING |

Action mapping can be provided in a BSA_I_ACTION_MAP table.

**BSA_I_ACTION_MAP Table**

| ***FieldName*** | ***Data Element*** | ***Technical Type*** |
|---|---|---|
| BO_NAME | BSA_BO_NAME | CHAR 30 |
| BO_NODE_NAME | BSA_BO_NODE_NAME | CHAR 30 |
| ACTION_NAME | BSA_BO_NODE_ACTION_NAME | CHAR 30 |
| PATH_ID | BSA_PATH_ID | CHAR 30 |
| REF_ACTION_NAME | BSA_BO_NODE_REF_ACTION_NAME | CHAR 30 |

Query mapping can be provided in a BSA_I_QUERY_MAP Table.

**BSA_I_QUERY_MAP Table**

| ***FieldName*** | ***Data Element*** | ***Technical Type*** |
|---|---|---|
| BO_NAME | BSA_BO_NAME | CHAR 30 |
| BO_NODE_NAME | BSA_BO_NODE_NAME | CHAR 30 |
| QUERY_NAME | BSA_BO_NODE_QUERY_NAME | CHAR 30 |
| PATH_ID | BSA_PATH_ID | CHAR 30 |
| REF_QUERY_NAME | BSA_BO_NODE_REF_QUERY_NAME | CHAR 30 |

Association mapping can be provided BSA_I_ASSOC_MAP Table.

**BSA_I_ASSOC_MAP Table**

| ***FieldName*** | ***Data Element*** | ***Technical Type*** |
|---|---|---|
| BO_NAME | BSA_BO_NAME | CHAR 30 |
| BO_NODE_NAME | BSA_BO_NODE_NAME | CHAR 30 |
| ASSOCIATION_NAME | BSA_BO_NODE_ASSOCIATION_NAME | CHAR 30 |
| LINK_TYPE | BSA_BO_NODE_LINK_TYPE | CHAR 1 |
| PATH_ID | BSA_PATH_ID | CHAR 30 |
| REF_ASSOC_NAME | BSA_BO_NODE_REF_ASSOC_NAME | CHAR 30 |
| REF_QUERY_NAME | BSA_BO_NODE_REF_QUERY_NAME | CHAR 30 |

### BSA_BO_NODE_LINK_TYPE

1 = Association
2 = Query

Floorplan Configuration. In some implementations, a controller object can be reused for several floorplans. But not all configured elements of a controller object need to be used in a floorplan. Therefore, a configuration table where the elements that are relevant for a floorplan can be stored can be provided. Floorplan configurations can comprise part of the controller object metadata and need not be transported separately in a dedicated object.

The **BSA_I_FLOORPLAN Table** can be used to define a CHAR30 ABAP name for a VC floorplan.

**BSA_I_FLOORPLAN Table**

| ***FieldName*** | ***Data Element*** | ***Technical Type*** |
|---|---|---|
| BO_NAME | BSA_BO_NAME | CHAR 30 |
| FP_NAME | BSA_FP_NAME | CHAR 30 |
| FP_EXTERNAL_NAME | BSA_FP_EXTERNAL_NAME | STRING |

**The** BSA_I_FP_CONF Table can be used to define which of the defined mappings of a controller object are relevant for a specific floorplan. When all mappings of a controller object are used for a specific floorplan then there will be no entry for this type in the table.

**BSA_I_FP_CONF Table**

| ***FieldName*** | ***Data Element*** | ***Technical Type*** |
|---|---|---|
| BO_NAME | BSA_BO_NAME | CHAR 30 |
| FP_NAME | BSA_FP_NAME | CHAR 30 |
| BO_NODE_NAME | BSA_BO_NODE_NAME | CHAR 30 |
| ELEMENT_SEQNR | BSA_ELEMENT_SEQNR | NUMC 3 |
| ELEMENT_TYPE | BSA_ELEMENT_TYPE | CHAR 1 |
| ELEMENT_NAME | BSA_ELEMENT_NAME | STRING |

BSA_ELEMENT_TYPE defines the type of a business object node element:
1: Attribute
2: Action
3: Association
4: Query

Various implementations of the subject matter described herein may be realized in digital electronic circuitry, integrated circuitry, specially designed ASICs (application specific integrated circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and may be implemented in a high-level procedural and/or object-oriented programming language, and/or in assembly/machine language. As used herein, the term "machine-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the subject matter described herein may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The subject matter described herein may be implemented in a computing system that includes a back-end component (e.g., as a data server), or that includes a middleware component (e.g., an application server), or that includes a front-end component (e.g., a client computer having a graphical user interface or a Web browser through which a user may interact with an implementation of the subject matter described herein), or any combination of such back-end, middleware, or front-end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

Although a few variations have been described in detail above, other modifications are possible. For example, the logic flow depicted in the accompanying figures and described herein do not require the particular order shown, or sequential order, to achieve desirable results. Other embodiments may be within the scope of the following claims.

## Claims

1. An article comprising a tangible machine-readable storage medium embodying instructions that when performed by one or more machines result in operations comprising:
receiving (110) a request originating at a frontend server for data encapsulated in a plurality of business objects, the plurality of business objects being stored in a business object layer (530) at the backend server, the request originating from a user interface layer (510) and being received by a controller layer (620);
instantiating (120) a controller object in the controller layer (620) at the backend server, the controller object having nodes (625) that are mapped to nodes (635) in the plurality of business objects so that the controller object encapsulates the requested data; and
initiating (130) transmission of data response to the request encapsulated by the controller object (625) to the frontend server,
wherein the controller object has an extension field (621, 623, 625, 627) corresponding to a visible data field on the user interface, the extension field being mapped to an extension field (621, 623, 625, 627) of a business object node (635), and
wherein a backend service adaptation mapping definition is created from extension fields, the mapping definition containing information that characterizes which extension field in a proxy structure of the controller object is mapped to which extension field in a proxy structure of an underlying business object;
rendering at least a portion of the data in a user interface in the user interface layer (510),
wherein data displayed together in the user interface is grouped together into a single controller object, and
wherein the extension field (621, 623, 625, 627) is visible on the user interface at the user interface layer (510).

2. An article according to claim 1, wherein a node (625) of the controller object is mapped to a primary node of a business object.

3. An article according to claim 2, wherein an ID of the corresponding node (625) for the controller object is based on an ID of the primary node and/or wherein associations of nodes (625) in the controller object are mapped to associations of the primary node and/or associations of business object nodes (635) associated with the primary node.

4. An article according to claim 2 or 3, wherein attributes of nodes (625) in the controller object are mapped to attributes of the primary node and/or attributes of business object nodes (635) associated with the primary node and/or wherein queries of nodes (625) in the controller object are mapped to queries of the primary node and/or queries of business object nodes (635) associated with the primary node.

5. An article according to claim 1, wherein the data displayed together are rendered in graphical user interface elements stored within a single graphical user interface container.

6. An article according to any one of claims 1 to 5, wherein a mapping object defines mappings between entities of the controller object to corresponding entities in the one or more business objects.

7. An article according to claim 6, wherein the entities are selected from a group comprising: attributes, actions, queries, and associations of business objects.

8. An article according to claim 1, wherein at least two nodes (625) for different controller objects are mapped to a single business object node (635) and/or wherein at least two nodes (625) for different controller objects have extension fields (621, 623, 625, 627) that are mapped to an extension field (621, 623, 625, 627) for a single business object node (635).

9. An article according to claim 8, wherein the controller objects correspond to disjoint user interface views in the user interface layer (510) and/or wherein at least one of the controller objects corresponds to two or more user interface views in the user interface layer (510) and/or wherein at least two of the controller objects are associated and have a corresponding association path.

10. A system comprising:
a frontend server; and
a backend server remote from the frontend server;
the frontend server originating, at a user interface layer (510), a request transmitted to a controller layer (620) of the backend server for data encapsulated in a plurality of business objects, the plurality of business objects being stored in a business object layer (530) at the backend server, the request originating from a user interface layer (510) and being received by a controller layer (620);
the backend server instantiating a controller object in the controller layer (620), the controller object having nodes (625) that are mapped to nodes (635) in the plurality of business objects so that the controller object encapsulates the requested data;
the backend server further initiating transmission of data response to the request encapsulated by the controller object to the frontend server,
wherein the controller object has an extension field (621, 623, 625, 627) corresponding to a visible data field on the user interface, the extension field being mapped to an extension field (621, 623, 625, 627) of a business object node (635),
wherein a backend service adaptation mapping definition is created from extension fields, the mapping definition containing information that characterizes which extension field in a proxy structure of the controller object is mapped to which extension field in a proxy structure of an underlying business object;
the front end server rendering at least a portion of the data in a user interface in the user interface layer (510),
wherein data displayed together in the user interface is grouped together into a single controller object, and
wherein the extension field (621, 623, 625, 627) is visible on the user interface at the user interface layer (510).

## Patentansprüche

1. Erzeugnis, das einen greifbaren maschinenlesbaren Datenträger umfasst, der Befehle enthält, die, wenn sie durch eine oder mehrere Maschinen durchgeführt werden, Vorgänge ergeben, die Folgendes umfassen:
Empfangen (110) einer Anforderung, die von einem Frontend-Server stammt, für Daten, die in mehreren Business-Objekten eingekapselt sind, wobei die mehreren Business-Objekte in einer Business-Objekt-Ebene (530) am Backend-Server gespeichert sind, wobei die Anforderung von einer User-Interface-Ebene (510) stammt und durch eine Controller-Ebene (620) empfangen wird;
Instanziieren (120) eines Controller-Objekts in der Controller-Ebene (620) an dem Backend-Server, wobei das Controller-Objekt Knoten (625) aufweist, die auf Knoten (635) in den mehreren Business-Objekten abgebildet sind, derart, dass das Controller-Objekt die angeforderten Daten einkapselt; und
Einleiten (130) der Übertragung der durch das Controller-Objekt (625) eingekapselten Datenantwort auf die Anforderung an den Frontend-Server,
wobei das Controller-Objekt ein Erweiterungsfeld (621, 623, 625, 627) aufweist, das einem sichtbaren Datenfeld auf der Benutzeroberfläche entspricht, wobei das Erweiterungsfeld auf ein Erweiterungsfeld (621, 623, 625, 627) eines Business-Objekt-Knotens (635) abgebildet ist, und
wobei eine Backend-Service-Anpassungsabbildungsdefinition aus Erweiterungsfeldern erzeugt wird, wobei die Abbildungsdefinition Informationen enthält, die kennzeichnen, welches Erweiterungsfeld in einer Proxy-Struktur des Controller-Objekts auf welches Erweiterungsfeld in einer Proxy-Struktur eines zugrundeliegenden Business-Objekts abgebildet wird;
Rendern von zumindest einem Abschnitt der Daten in einer Benutzeroberfläche in der User-Interface-Ebene (510),
wobei Daten, die zusammen in der Benutzeroberfläche angezeigt werden, in ein einziges Controller-Objekt zusammengruppiert werden, und
wobei das Erweiterungsfeld (621, 623, 625, 627) auf der Benutzeroberfläche auf der User-Interface-Ebene (510) sichtbar ist.

2. Erzeugnis nach Anspruch 1, wobei ein Knoten (625) des Controller-Objekts auf einen Primärknoten eines Business-Objekts abgebildet ist.

3. Erzeugnis nach Anspruch 2, wobei eine ID des entsprechenden Knotens (625) für das Controller-Objekt auf einer ID des Primärknotens basiert und/oder wobei Verknüpfungen von Knoten (625) in dem Controller-Objekt auf Verknüpfungen des Primärknotens und/oder Verknüpfungen von Business-Objekt-Knoten (635) abgebildet sind, die dem Primärknoten zugehörig sind.

4. Erzeugnis nach Anspruch 2 oder 3, wobei Attribute von Knoten (625) in dem Controller-Objekt auf Attribute des Primärknotens und/oder Attribute von Business-Objekt-Knoten (635) abgebildet sind, die dem Primärknoten zugehörig sind, und/oder wobei Abfragen von Knoten (625) in dem Controller-Objekt auf Abfragen des Primärknotens und/oder Abfragen von Business-Objekt-Knoten (635) abgebildet sind, die dem Primärknoten zugehörig sind.

5. Erzeugnis nach Anspruch 1, wobei die Daten, die zusammen angezeigt werden, in grafischen Benutzeroberflächenelementen gerendert werden, die innerhalb eines einzigen User-Interface-Containers gespeichert sind.

6. Erzeugnis nach einem der Ansprüche 1 bis 5, wobei ein Abbildungsobjekt Abbildungen zwischen Entitäten des Controller-Objekts auf entsprechende Entitäten in dem einen oder den mehreren Business-Objekten definiert.

7. Erzeugnis nach Anspruch 6, wobei die Entitäten von einer Gruppe ausgewählt sind, die Folgendes umfasst: Attribute, Aktionen, Abfragen und Verknüpfungen von Business-Objekten.

8. Erzeugnis nach Anspruch 1, wobei mindestens zwei Knoten (625) für unterschiedliche Controller-Objekte auf einen einzigen Business-Objekt-Knoten (635) abgebildet sind und/oder wobei mindestens zwei Knoten (625) für unterschiedliche Controller-Objekte Erweiterungsfelder (621, 623, 625, 627) aufweisen, die auf ein Erweiterungsfeld (621, 623, 625, 627) für einen einzigen Business-Objekt-Knoten (635) abgebildet sind.

9. Erzeugnis nach Anspruch 8, wobei die Controller-Objekte disjunkten Benutzeroberflächenansichten in der User-Interface-Ebene (510) entsprechen und/oder wobei mindestens eines von den Controller-Objekten zwei oder mehr Benutzeroberflächenansichten in der User-Interface-Ebene (510) entspricht und/oder wobei mindestens zwei von den Controller-Objekten verknüpft sind und einen entsprechenden Verknüpfungspfad aufweisen.

10. System, das Folgendes umfasst:
einen Frontend-Server; und
einen Backend-Server, der von dem Frontend-Server entfernt ist;
wobei der Frontend-Server an einer User-Interface-Ebene (510) eine Anforderung hervorbringt, die an eine Controller-Ebene (620) des Backend-Servers für Daten übermittelt wird, die in mehreren Business-Objekten eingekapselt sind, wobei die mehreren Business-Objekte in einer Business-Objekt-Ebene (530) am Backend-Server gespeichert sind, wobei die Anforderung von einer User-Interface-Ebene (510) stammt und durch eine Controller-Ebene (620) empfangen wird;
der Backend-Server ein Controller-Objekt in der Controller-Ebene (620) instanziiert, wobei das Controller-Objekt Knoten (625) aufweist, die auf Knoten (635) in den mehreren Business-Objekten abgebildet sind, derart, dass das Controller-Objekt die angeforderten Daten einkapselt;
der Backend-Server ferner die Übertragung der durch das Controller-Objekt eingekapselten Datenantwort auf die Anfrage an den Frontend-Server einleitet,
wobei das Controller-Objekt ein Erweiterungsfeld (621, 623, 625, 627) aufweist, das einem sichtbaren Datenfeld auf der Benutzeroberfläche entspricht, wobei das Erweiterungsfeld auf ein Erweiterungsfeld (621, 623, 625, 627) eines Business-Objekt-Knotens (635) abgebildet ist,
wobei eine Backend-Service-Anpassungsabbildungsdefinition aus Erweiterungsfeldern erzeugt wird, wobei die Abbildungsdefinition Informationen enthält, die kennzeichnen, welches Erweiterungsfeld in einer Proxy-Struktur des Controller-Objekts auf welches Erweiterungsfeld in einer Proxy-Struktur eines zugrundeliegenden Business-Objekts abgebildet ist;
der Frontend-Server mindestens einen Abschnitt von den Daten in einer Benutzeroberfläche in der User-Interface-Ebene (510) rendert,
wobei Daten, die zusammen in der Benutzeroberfläche angezeigt werden, in ein einziges Controller-Objekt zusammengruppiert werden, und
wobei das Erweiterungsfeld (621, 623, 625, 627) auf der Benutzeroberfläche auf der User-Interface-Ebene (510) sichtbar ist.

## Revendications

1. Article comprenant un support de stockage lisible par une machine tangible contenant des instructions que, quand elles sont exécutées par une ou plusieurs machines, se traduisent par des opérations comprenant :
la réception (110) d'une demande provenant d'un serveur frontal pour des données encapsulées dans une pluralité d'objets commerciaux, la pluralité d'objets commerciaux étant stockée dans une couche d'objets commerciaux (530) au serveur dorsal, la demande provenant d'une couche d'interface utilisateur (510) et étant reçue par une couche de commande (620) ;
l'instanciation (120) d'un objet de commande dans la couche de commande (620) au serveur dorsal, l'objet de commande comportant des noeuds (625) qui sont mappés à des noeuds (635) dans la pluralité d'objets commerciaux de sorte que l'objet de commande encapsule les données demandées ; et
le lancement (130) d'une transmission d'une réponse de données à la demande encapsulée par l'objet de commande (625) au serveur frontal,
dans lequel l'objet de commande possède un champ d'extension (621, 623, 625, 627) correspondant à un champ de données visible sur l'interface utilisateur, le champ d'extension étant mappé à un champ d'extension (621, 623, 625, 627) d'un noeud d'objets commerciaux (635), et
dans lequel une définition de mappage d'adaptation de service dorsal est créée à partir de champs d'extension, la définition de mappage contenant des informations qui caractérisent quel champ d'extension dans une structure proxy de l'objet de commande est mappé à quel champ d'extension dans une structure proxy d'un objet commercial sous-jacent ;
le rendu d'au moins une partie des données dans une interface utilisateur dans la couche d'interface utilisateur (510),
dans lequel les données affichées ensemble dans l'interface utilisateur sont regroupées ensemble dans un seul objet de commande, et
dans lequel le champ d'extension (621, 623, 625, 627) est visible sur l'interface utilisateur à la couche d'interface utilisateur (510).

2. Article selon la recommandation 1, dans lequel un noeud (625) de l'objet de commande est mappé à un noeud primaire d'un objet commercial.

3. Article selon la revendication 2, dans lequel un ID du noeud (625) correspondant pour l'objet de commande est basé sur un ID du noeud primaire et/ou dans lequel des associations de noeuds (625) dans l'objet de commande sont mappées aux associations du noeud primaire et/ou des associations de noeuds (635) d'objets commerciaux associés au noeud primaire.

4. Article selon la revendication 2 ou 3, dans lequel les attributs des noeuds (625) dans l'objet de commande sont mappés aux attributs du noeud primaire et/ou aux attributs des noeuds (635) des objets commerciaux associés au noeud primaire et/ou dans lequel des demandes de noeuds (625) dans l'objet de commande sont mappées à des demandes du noeud primaire et/ou à des demandes de noeuds (635) d'objets commerciaux associées au noeud primaire.

5. Article selon la revendication 1, dans lequel les données affichées ensemble sont rendues dans des éléments d'une interface utilisateur graphique stockés dans un seul conteneur d'interface utilisateur graphique.

6. Article selon l'une quelconque des revendications 1 à 5, dans lequel un objet de mappage définit des mappages entre des entités de l'objet de commande et des entités correspondantes dans un ou plusieurs objets commerciaux.

7. Article selon la revendication 6, dans lequel les entités sont sélectionnées parmi le groupe constitué : d'attributs, de mesures, de demandes et d'associations d'objets commerciaux.

8. Article selon la revendication 1, dans lequel au moins deux noeuds (625) pour différents objets de commande sont mappés à un seul noeud (635) d'objet commercial et/ou dans lequel au moins deux noeuds (625) pour différents objets de commande possèdent des champs d'extension (621, 623, 625, 627) qui sont mappés à un champ d'extension (621, 623, 625, 627) pour un seul noeud (635) d'objet commercial.

9. Article selon la revendication 8, dans lequel les objets de commande correspondent à des vues d'interface utilisateur discontinues dans la couche d'interface utilisateur (510) et/ou dans lequel au moins un des objets de commande correspond à deux ou plusieurs vues d'interface utilisateur (510) et/ou dans lequel au moins deux des objets de commande sont associés et possèdent une voie d'association correspondante.

10. Système comprenant :
un serveur frontal ; et
un serveur dorsal distant du serveur frontal ;
le serveur frontal étant à l'origine, à une couche d'interface utilisateur (510), d'une demande transmise à une couche de commande (620) du serveur dorsal pour des données encapsulées dans une pluralité d'objets commerciaux, la pluralité d'objets commerciaux étant stockée dans une couche d'objets commerciaux (530) au serveur dorsal, la demande provenant d'une couche d'interface utilisateur (510) et étant reçue par une couche de commande (620) ;
le serveur dorsal instanciant un objet de commande dans la couche de commande (620), l'objet de commande comportant des noeuds (625) qui sont mappés à des noeuds (635) dans la pluralité d'objets commerciaux de sorte que l'objet de commande encapsule les données demandées ;
le serveur dorsal lançant en outre une transmission de réponse de données à la demande encapsulée par l'objet de commande au serveur frontal,
dans lequel l'objet de commande possède un champ d'extension (621, 623, 625, 627) correspondant à un champ de données visible sur l'interface utilisateur, le champ d'extension étant mappé à un champ d'extension (621, 623, 625, 627) d'un noeud d'objets commerciaux (635),
dans lequel une définition de mappage d'adaptation de service dorsal est créée à partir de champs d'extension, la définition de mappage contenant des informations qui caractérisent quel champ d'extension dans une structure proxy de l'objet de commande est mappé à quel champ d'extension dans une structure proxy d'un objet commercial sous-jacent ;
le serveur frontal rendant au moins une partie des données dans une interface utilisateur dans la couche d'interface utilisateur (510),
dans lequel les données affichées ensemble dans l'interface utilisateur sont regroupées ensemble dans un seul objet de commande, et
dans lequel le champ d'extension (621, 623, 625, 627) est visible sur l'interface utilisateur à la couche d'interface utilisateur (510).
